# EUROPEAN PATENT SPECIFICATION

(11) **EP 1 834 845 B1**
(45) Date of publication and mention of the grant of the patent: **01.12.2010**
(21) Application number: 07381018.6
(22) Date of filing: 01.03.2007
(51) Int. Cl.: B60R 21/203

(54) **Vehicle steering wheel with an integrated airbag**
Fahrzeuglenkrad mit eingebautem Airbag
Volant de direction de véhicule avec airbag intégré

(30) Priority: 13.03.2006 ES 200600639
(43) Date of publication of application: 19.09.2007
(73) Proprietor: Dalphi Metal España, S.A., 28006 Madrid (ES)
(72) Inventor: Boullosa Vázquez, Javier, 36123, Vigo, Pontevedra (ES); Ollero Ollero, Jorge, 36123, Vigo, Pontevedra (ES)
(74) Representative: Mehnert, Bernhard

(56) References cited:
- EP-A- 1 354 770
- DE-A1- 19 927 032
- DE-C1- 19 725 684
- DE-U1- 20 311 760

## Description

### Field of the Invention

The present invention relates to an automotive vehicle steering wheel with an integrated airbag module and more particularly to the steering wheel of an automotive vehicle with an airbag module snap-fitted in the steering wheel.

### Background of the Invention

Spanish utility model 1 040 263 of the same applicant of the present invention describes means for snap-fitting the airbag module to the steering wheel consisting on one hand of a spring having one or more points fixed in the casing of the airbag module and on the other hand an insert of the steering wheel which is formed from a body finished in an arrow tip to allow the easy introduction thereof in a receptacle closing said spring and keeping it retained by the horizontal section of the mentioned insert. In turn, the steering wheel includes an access from outside by which, by means of a screwdriver or the like, the resistance of the spring can be overcome and the unblocking of the snap-fitting and therefore the removal of the insert from the receptacle in which it is retained by the spring is allowed.

European patent EP 1 179 457 describes means for snap-fitting the airbag module to the steering wheel consisting on one hand of feet integral with the steering wheel and on the other hand of an elastic rod arranged in the casing of the airbag module. Said elastic rod is deformed by means of a suitable tool in order to remove the snap-fitting of the airbag module.

Moreover, document DE 19725684 describes a steering wheel according to the preamble of claim 1.

A drawback of the previous technique is that the snap-fitting removal operation is not easy because the immediate contact of the snap-fitting removing tool with the snap-fitting spring is not ensured which means that several attempts may be necessary until it is achieved.

The present invention is oriented to solving this drawback.

### Summary of the Invention

The steering wheel of an automotive vehicle with an integrated airbag module according to the present invention comprises:
- A steering wheel with a base, a ring and several radii structured by a framework and a foam filling.
- An airbag module
- Cooperating means for fixing the airbag module in the steering wheel, consisting of:
   a) In the steering wheel, at least two arms with a hook at the end thereof, incorporated in the framework of the steering wheel in the area of one of its radii.
   b) In the airbag module, a spring arranged in the lower part thereof with two areas provided for being snap-fit to said hooks by vertical pushing.
- An open channel in the lower part of said arms to allow the passage of a tool that can remove the snap-fitting of the airbag module by pushing said springs.

An important feature of the present invention is that said channel not only serves as a duct for the passage of a snap-fitting removing tool but also as a guide thereof, which considerably facilitates the snap-fitting removal operation.

Other features and advantages of the present invention will be disclosed in the following description of an illustrative and in no case limiting embodiment of the object thereof in relation to the attached drawings.

### Description of the Drawings

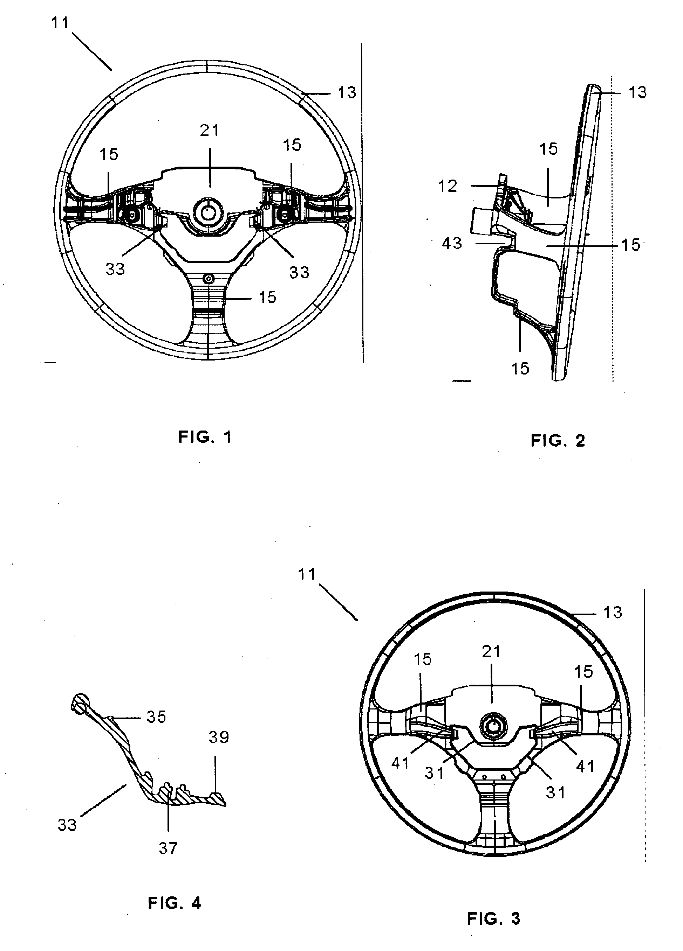

Figure 1 is a front view of a vehicle steering wheel according to the present invention.
Figure 2 is a side view of a vehicle steering wheel according to the present invention.
Figure 3 is a rear view of a vehicle steering wheel according to the present invention.
Figure 4 is a sectional view of an arm incorporated in the vehicle steering wheel according to the present invention to serve as a means for fixing the airbag module.

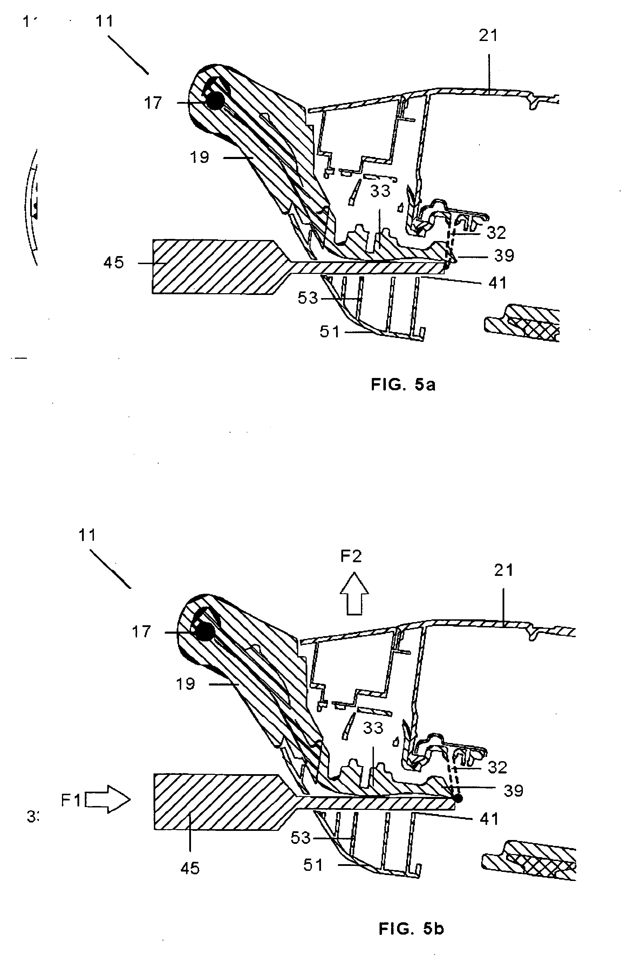

Figures 5a and 5b are cross-sectional views of a vehicle steering wheel with an integrated airbag module according to the present invention which illustrates the snap-fitting removal operation.

### Detailed Description of the Invention

The figures show a steering wheel 11 of an automotive vehicle which is configured, as is well known in the art, with a base 12, a ring 13 and several radii 15 and is structured based on a framework 17 and a foam filling 19. The steering wheel 11 has an airbag module 21 fixed thereto.

The fixing of the airbag module 21 to the steering wheel 11 is carried out by means of snap-fitting two snap-fitting parts 32 of a spring 31 located in the lower part of the airbag module 21 in the hooks 39 of two arms 33 incorporated in the framework 17 of the steering wheel 11. This snap-fitting is carried out vertically because the spring 31 is elastic. In a preferred embodiment said snap-fitting parts 32 of the spring 31 are U-shaped.

Said arms 33 are incorporated in the framework 17 of the steering wheel 11 in the areas occupied by the two diametrically opposite radii 15 and therein there is distinguished a first part 35 integrated in the structure of the steering wheel 11 and a second part 37 projecting from said structure.

In turn, the arms 33 include a channel 41 in the lower part thereof which serves as a duct for the passage of a tool 45 for removing the snap-fitting of the airbag module 21 by pushing the snap-fitting parts 32 of said spring 31. The inlet opening 43 of this channel 41 is in the lower part of the radius 15 of the steering wheel 11. The rear cover 51 of the steering wheel includes in turn ribs 53 finished in line with the channel 41 to facilitate the guiding of the tool 45 during the snap-fitting removal operation.

In this operation, the force F1 necessary to separate the spring 31 from the hook 39 is applied to the tool 45 in the direction of the channel 41 and at the same time the vertical force F2 necessary to release the airbag module 21 is applied.

Although several embodiments of the invention have been described and shown, it is evident that modifications comprised within the scope thereof can be introduced therein, and the latter must not be considered limited to said embodiments but to the contents of the following claims.

## Claims

1. A steering wheel (11) of an automotive vehicle with an integrated airbag module (21), the steering wheel comprising a base (12), ring (13) and several radii (15) structured based on a framework (17); the airbag module (21) and the steering wheel (11) comprising cooperating means for fixing the airbag module (21) in the steering wheel (11), such that:
a) in the steering wheel (11), said means consist of at least two arms (33) with a hook (39) at the end thereof, incorporated in the framework (17) of the steering wheel (11) in the area of one of its radii (15);
b) in the airbag (21), said means consist of a spring (31) arranged in the lower part thereof which is snap-fit to said hooks (39) by vertical pushing in two snap-fitting parts (32) configured for that purpose; and
c) said arms (33) include an channel (41) in the lower part thereof to allow the passage of a tool (45) that can remove the snap-fitting of the airbag module (21) by pushing said snap-fitting parts (32) of the spring (31)
**characterized in that**
the several radii (15) are structured based also on a foam filling (19) and the channel (41) in the arms (33) is an open channel, the steering wheel (11) also comprising a rear cover (51), said rear cover (51) comprising ribs (53) finished in line with the channel (41) to facilitate the guiding of the tool (45) during the snap-fitting removal operation.

2. A steering wheel (11) of an automotive vehicle with an integrated airbag module (21) according to claim 1, **characterized in that** a first part (35) of said arms (33) is integrated in the structure of the steering wheel (11) and a second part (37) projects from said structure.

3. A steering wheel (11) of an automotive vehicle with an integrated airbag module (21) according to claim 1, **characterized in that** the inlet opening (43) of each channel (41) is located in the lower part of a radius (15) of the steering wheel (11).

4. A steering wheel (11) of an automotive vehicle with an integrated airbag module (21) according to claim 1, **characterized in that** said snap-fitting parts (32) of the spring (31) are U-shaped.

## Patentansprüche

1. Ein Lenkrad (11) eines Kraftfahrzeuges mit einem integrierten Luftsack Modul (21), wobei das Lenkrad eine Basis (12), einen Ring (13) und mehrere Speichen (15) umfasst, die strukturell auf einem Gerüst (17) basieren, und wobei das Luftsack Modul (21) und das Lenkrad (11) Verbindungsmittel zur Befestigung des Luftsack Moduls (21) in dem Lenkrad (11) aufweisen, derart dass:
a) in dem Lenkrad (11) die Verbindungsmittel aus wenigstens zwei Armen (33) mit einem Haken (39) an ihrem jeweiligen Ende bestehen, welcher in das Gerüst (17) des Lenkrads (11) im Bereich einer seiner Speichen (15), eingearbeitet ist;
b) in dem Luftsack Modul (21) die Verbindungsmittel aus einer in seinem unteren Bereich angeordneten Feder (31) bestehen, welche an den Haken (39) durch vertikales Drücken in zwei zu diesem Zweck ausgebildete Einrastteile (32) eingerastet ist; und
c) die Arme (33) einen Kanal (41) in ihrem unteren Bereich aufweisen, welcher den Durchlass eines Werkzeugs (45) ermöglicht, das die Rastverbindung des Luftsack Moduls (21) durch Drücken der Einrastteile (32) der Feder (31) löst,
**dadurch gekennzeichnet, dass** die mehreren Speichen (15) strukturell auch auf einer Umschäumung (19) basieren und, der Kanal (41) in den Armen (33) ein offener Kanal ist, das Lenkrad (11) auch eine rückseitige Abdeckung (51) aufweist, wobei die rückseitige Abdeckung (51) auf den Kanal (41) ausgerichtete Rippen (53) aufweist, um eine Führung des Werkzeugs (45) während des Lösevorgangs der Rastverbindung erleichtern.

2. Ein Lenkrad (11) eines Kraftfahrzeugs mit einem integrierten Luftsack Modul (21) gemäß Anspruch 1, **dadurch gekennzeichnet, dass**
ein erster Bereich (35) der Arme (33) in die Struktur des Lenkrades (11) integriert ist und ein zweiter Bereich (37) von dieser Struktur hervorsteht.

3. Ein Lenkrad (11) eines Kraftfahrzeugs mit einem integrierten Luftsack Modul (21) gemäß Anspruch 1, **dadurch gekennzeichnet, dass**
sich die Einlassöffnung (43) eines jeden Kanals (41) in dem unteren Bereich einer Speiche (15) des Lenkrads (11) befindet.

4. Ein Lenkrad (11) eines Kraftfahrzeugs mit einem integrierten Luftsack Modul (21) gemäß Anspruch 1, **dadurch gekennzeichnet, dass**
die Einrastteile (32) der Feder (31) U-förmig ausgebildet sind.

## Revendications

1. Un volant de direction (11) de véhicule automobile avec un module airbag (21), le volant comprenant une base (12), un anneau (13) et plusieurs rayons (15) organisés en une structure (17); le module airbag (21) et le volant de direction (11) comprenant des moyens interagissant pour fixer le module airbag (21) dans le volant de direction (11), tels que:
a) pour le volant de direction (11), les dits moyens sont constitués d'au moins deux bras (33) avec un crochet (39) aux extrémités, intégrés dans la structure (17) du volant de direction (11) dans la zone de l'un de ses rayons (15):
b) pour le coussin gonflable (21), les dits moyens sont constitués d'un ressort (31) disposé dans la partie inférieure de celui-ci qui est encliquetable aux dits crochets (39) par poussée verticale dans deux parties encliquetables (32) configurées à cette fin;
c) les dits bras (33) comprennent un canal (41) dans leur parties inférieures pour permettre le passage d'un outil (45) qui peut défaire l'encliquetage du module airbag (21) en poussant ces pièces encliquetées (32) hors du ressort (31) **caractérisés en ce que**
les différents rayons (15) sont également renforcés dû à un remplissage par mousse (19) et le canal (41) dans les bras (33) est un canal ouvert, le volant de direction (11) comprenant aussi un capot arrière (51), le dit capot arrière (51) comportant des nervures (53) se terminant en ligne avec le canal (41) pour faciliter le guidage de l'outil (45) au cours de l'opération de désencliquetage.

2. Un volant de direction (11) de véhicule automobile avec un module airbag (21) selon la revendication 1, **caractérisé en ce qu'**une première partie (35) des dits bras (33) est intégrée dans la structure du volant de direction (11) et une seconde partie (37) ressort de la dite structure.

3. Un volant de direction (11) de véhicule automobile avec un module airbag (21) selon la revendication 1, **caractérisé en ce que** l'orifice d'entrée (43) de chaque canal (41) est situé dans la partie inférieure d'un rayon (15) du volant de direction (11).

4. Un volant de direction (11) de véhicule automobile avec un module airbag (21) selon la revendication 1, **caractérisé en ce que** les dites parties enclipsables (32) du ressort (31) sont en forme de U.
